# EUROPEAN PATENT SPECIFICATION

(11) **EP 4 440 075 B1**
(45) Date of publication and mention of the grant of the patent: **10.06.2026**
(21) Application number: 22909924.7
(22) Date of filing: 19.12.2022
(51) Int. Cl.: H04L 47/50, H04L 49/9005, H04L 49/90, H04L 47/32

(54) **QUEUE CONTROL METHOD AND APPARATUS**
WARTESCHLANGENSTEUERUNGSVERFAHREN UND -VORRICHTUNG
PROCÉDÉ ET APPAREIL DE COMMANDE DE FILE D'ATTENTE

(30) Priority: 21.12.2021 CN 202111575784
(43) Date of publication of application: 02.10.2024
(73) Proprietor: Huawei Technologies Co., Ltd., Shenzhen, Guangdong 518129 (CN)
(72) Inventor: WEN, Huafeng, Shenzhen, Guangdong 518129 (CN); WANG, Jian, Shenzhen, Guangdong 518129 (CN); SHAO, Shiwen, Shenzhen, Guangdong 518129 (CN); ZHOU, Xingwang, Shenzhen, Guangdong 518129 (CN)
(74) Representative: Körber, Martin Hans
(86) International application number: PCT/CN2022/139953
(87) International publication number: WO 2023/116611

(56) References cited:
- CN-A- 1 402 472
- CN-A- 109 660 468
- CN-A- 113 064 738
- US-A1- 2002 188 648
- US-A1- 2009 161 684
- US-A1- 2010 195 494
- US-B1- 6 219 728
- US-B1- 7 369 500

## Description

### TECHNICAL FIELD

This application relates to the field of communication technologies, and in particular, to a queue control method, device and computer-readable storage medium.

### BACKGROUND

A device in a communication network may be connected to another device through an egress port, and send a packet to the another device through the egress port. To ensure transmission quality of the packet, a queue may be configured for an egress port of a network device. The device can cache the packet that needs to be sent through the egress port in the queue and schedule the packet cached in the queue to be dequeued according to a queue scheduling algorithm. The packet that is scheduled to be dequeued may be sent to the another device through the egress port.

A maximum total quantity of bytes of packets that the device allows to cache in the queue may be referred to as a queue threshold. In other words, a sum of bytes of packets cached in the queue does not exceed the queue threshold. When the total quantity of the bytes of the packets cached in the queue reaches the queue threshold, the device rejects adding of a new packet to the queue. For example, the device may drop a received new packet after the total quantity of the bytes of the packets cached in the queue reaches the queue threshold.

However, the foregoing queue control method increases a probability that the packet is dropped, and affects normal transmission of the packet.

US 2009/0161684 A1 discloses methods and for dynamically buffer allocation to a plurality of queues of differing priority levels.

### SUMMARY

This application provides a queue control method, device and computer-readable medium to flexibly adjust a queue threshold of a queue, reduce a probability that a packet is dropped, and improve reliability of packet forwarding. The invention is defined in the independent claims. Additional features of the invention are provided in the dependent claims. In the following, parts of the description and drawings referring to embodiments which are not covered by the claims are not presented as embodiments of the invention, but as examples useful for understanding the invention.

According to a first aspect, this application provides a queue control method. The method is applied to a first device, and the first device may be, for example, a network device such as a switch. For example, the first device obtains a packet drop parameter of a first queue, and determines whether the packet drop parameter of the first queue is greater than a first packet drop threshold. The first queue may be a queue corresponding to a port of the first device, or may be a queue corresponding to a port of another device other than the first device. The packet drop parameter of the first queue is determined based on a quantity of packets or a total quantity of bytes of packets that are dropped by the first device because the packets cannot be added to the first queue. For example, the packet drop parameter may be a total quantity of bytes of packets that are dropped by the first device in a specified period of time and that should be added to the first queue. The first packet drop threshold is a lower limit value for the first device to adjust a first cache parameter. If the packet drop parameter of the first queue is greater than the first packet drop threshold, it indicates that the first device drops a large quantity of packets because the packets cannot be added to the first queue. In this case, to reduce a probability that the packet is dropped, the first device may increase the first cache parameter, and control adding of the packet to the first queue, based on the increased first cache parameter. The first cache parameter is for adjusting a queue threshold of the first queue. The queue threshold of the first queue indicates a maximum total quantity of bytes of packets that are allowed to be cached in the first queue. In other words, the first device may adjust, based on a status of a packet that is dropped because the packet cannot be added to the first queue, the first cache parameter for determining the queue threshold of the first queue. In this way, the first device may flexibly adjust the queue threshold of the first queue based on a packet drop status of the first queue. In this way, it can be avoided that a packet is dropped because a total quantity of bytes of packets cached in the first queue reaches the queue threshold of the first queue, the probability that the packet is dropped is reduced, and the reliability of packet forwarding is improved.

**In** a possible design, the first cache parameter indicates a ratio of cache space that can be occupied by the first queue to remaining cache space of a port on which the first queue is located. The remaining cache space is cache space that is unoccupied in total cache space of the port on which the first queue is located. In other words, the first cache parameter indicates a proportion of cache space that can be allocated to the first queue in the remaining cache space of the port on which the first queue is located. Correspondingly, in a process of adding the packet to the first queue, the first device first obtains the remaining cache space of the port on which the first queue is located. Then, the first device calculates, based on the remaining cache space of the port on which the first queue is located and the first cache parameter, cache space that can be additionally occupied by the first queue, and uses a sum of cache space that has been occupied by the first queue and the cache space that can be additionally occupied by the first queue as the queue threshold of the first queue. In this way, the first device may determine, based on the queue threshold of the first queue, whether to add the packet to the first queue, and limit the total quantity of bytes of the packets cached in the first queue to be below the queue threshold of the first queue. Optionally, after the total quantity of bytes of the packets cached in the first queue reaches the queue threshold of the first queue, the first device may re-obtain the remaining cache space of the port on which the first queue is located, and re-calculate the queue threshold of the first queue based on the first cache parameter.

In a possible design, to prevent the first queue from occupying excessively large cache space and affecting another queue, the first cache parameter is not greater than an upper limit of a cache parameter. For example, before increasing the first cache parameter, the first device may first determine that the first cache parameter is less than the upper limit of the cache parameter, or determine that the increased first cache parameter is less than (or less than or equal to) the upper limit of the cache parameter. In this way, a ratio of the cache space that can be additionally occupied by the first queue to the remaining cache space of the port on which the first queue is located does not exceed the upper limit of the cache parameter, so that the first queue does not excessively occupy the remaining cache space of the port on which the first queue is located, to ensure that another queue corresponding to the port on which the first queue is located has sufficient cache space for caching a packet.

In the foregoing possible design, the packet drop parameter of the first queue is greater than the first packet drop threshold. In another possible design, if the packet drop parameter of the first queue is less than or equal to the first packet drop threshold, the first device decreases the first cache parameter. For example, after obtaining the packet drop parameter of the first queue, the first device may determine whether the packet drop parameter of the first queue is less than a second packet drop threshold. If the packet drop parameter of the first queue is less than (or less than or equal to) the second packet drop threshold, the first device may decrease the first cache parameter, to decrease a proportion of remaining cache space that is of the port on which the first queue is located and that can be additionally occupied by the first queue, so that the first queue does not excessively occupy the remaining cache space of the port on which the first queue is located. Optionally, the second packet drop threshold may be equal to the first packet drop threshold, or may be less than the first packet drop threshold.

In a possible design, the first device periodically adjusts the first cache parameter. For example, the first device may periodically obtain the packet drop parameter of the first queue, and each time after obtaining the packet drop parameter of the first queue, adjust the first cache parameter based on a value relationship between the packet drop parameter of the first queue and the first packet drop threshold.

In a possible design, the first device adjusts the first cache parameter based on packet drop parameters of the first queue in a plurality of periods. For example, the first device decreases the first cache parameter in an i^{th} period. The first device may obtain a cache parameter of the first queue in each of M periods ahead of the i^{th} period. i and M are positive integers, and M is less than i. Then, the first device may determine whether the packet drop parameter of the first queue is less than the second packet drop threshold in each of the M periods ahead of the i^{th} period. If the packet drop parameter of the first queue is less than the second packet drop threshold in each of the M periods ahead of the i^{th} period, it indicates that in M consecutive periods ahead of a current period, a probability that a packet that needs to be added to the first queue is dropped is low, and the first device may decrease the first cache parameter.

In a possible design, the first device determines, based on a packet cache status in the first queue, whether the first cache parameter needs to be decreased. For example, the first device decreases the first cache parameter in the i^{th} period. The first device may obtain the packet cache status in the first queue when each of the M periods ahead of the i^{th} period ends. If the total quantity of bytes of the packets cached in the first queue is less than or equal to the specified threshold when each of the M periods ahead of the i^{th} period ends, it indicates that a small quantity of packets are added to the first queue in each period, and the first device may decrease the first cache parameter.

In a possible design, the first device stores a packet drop parameter of each period, so that in a subsequent process, the stored packet drop parameter of the first queue is for determining whether to adjust the first cache parameter.

In a possible design, the port on which the first queue is located further includes a second queue. The first queue is for forwarding a packet of a mice flow, and the second queue is for forwarding a packet of an elephant flow. Optionally, a data flow that includes a quantity of packets less than or equal to N is referred to as the mice flow, and a data flow that includes a quantity of packets greater than N is referred to as the elephant flow. When receiving a first packet of a data flow A, the first device first forwards the data flow A as the mice flow by using the first queue. When the quantity of packets of the data flow A is greater than N, the first device forwards the data flow A as the elephant flow by using the second queue starting from an (N+1)^{th} packet. In this case, although a packet of the data flow A may still exist in the first queue, it is still considered that all packets processed by the first queue are packets of the mice flow.

In a possible design, to add the packet of the mice flow to the first queue and add the packet of the elephant flow to the second queue, the first device adjusts N based on a forwarding parameter of the first queue and a forwarding parameter of the second queue. For example, the forwarding parameter may include an average packet length and/or a forwarding rate. The first device first obtains the forwarding parameter of the first queue and the forwarding parameter of the second queue. Then, the first device calculates a ratio of the forwarding parameter of the first queue to the forwarding parameter of the second queue, and compares the ratio obtained through calculation with an expected ratio. If the ratio obtained through calculation does not match the expected ratio, it indicates that division of the elephant flow and the mice flows is improper. In this case, the first device may adjust N to change quantities of packets entering the first queue and the second queue, and ensure a forwarding indicator of the mice flow, for example, the forwarding indicator such as flow completion time (flow completion time, FCT).

In a possible design, the expected ratio is 0.25.

In a possible design, the first device adjusts N based on a value relationship between the ratio of the forwarding parameter of the first queue to the forwarding parameter of the second queue and the expected ratio. For example, if the ratio of the forwarding parameter of the first queue to the forwarding parameter of the second queue is greater than the expected ratio, it indicates that excessive packets are cached in the first queue. The first device may decrease N, to decrease a quantity of packets added to the first queue. If the ratio of the forwarding parameter of the first queue to the forwarding parameter of the second queue is less than the expected ratio, it indicates that excessive packets are cached in the second queue. The first device may increase N, to increase a quantity of packets added to the first queue.

In a possible design, if the ratio of the forwarding parameter of the first queue to the forwarding parameter of the second queue falls in a trusted range of the expected ratio, the first device does not adjust N. For example, that the ratio of the forwarding parameter of the first queue to the forwarding parameter of the second queue is greater than the expected ratio may include that the ratio of the forwarding parameter of the first queue to the forwarding parameter of the second queue is greater than an upper limit value in the trusted range of the expected ratio; that the ratio of the forwarding parameter of the first queue to the forwarding parameter of the second queue is less than the expected ratio may include that the ratio of the forwarding parameter of the first queue to the forwarding parameter of the second queue is less than a lower limit value in the trusted range of the expected ratio.

In a possible design, the first device may probabilistically drop a packet to be added to the second queue. For example, when a total quantity of bytes of packets cached in the second queue reaches a start threshold, and the total quantity of bytes of the packets cached in the second queue is less than a stop threshold of the second queue, the first device may calculate a drop probability based on the total quantity of bytes of the packets cached in the second queue, and drop, based on the drop probability, the packet to be added to the second queue. The start threshold is less than the stop threshold, and the stop threshold is less than or equal to a queue threshold of the second queue.

In a possible design, the first device drops, by using a weighted random early detection (weighted random early detection, WRED) probability, the packet to be added to the second queue.

In a possible design, the first device adjusts a second cache parameter based on a packet drop status of the first queue. The second cache parameter indicates the first device to probabilistically drop the packet to be added to the second queue. Optionally, the second cache parameter may include the start threshold and the stop threshold. For example, the first device may determine whether the packet drop parameter of the first queue is greater than a third packet drop threshold. If the packet drop parameter of the first queue is greater than the third packet drop threshold, the first device may adjust the second cache parameter, to increase a probability that the first device drops the packet to be added to the second queue, and decrease cache space occupied by the second queue. In this way, the remaining cache space of the port on which the first queue is located is increased, and the cache space that can be additionally occupied by the first queue is increased. Optionally, the third packet drop threshold may be equal to the first packet drop threshold and/or the second packet drop threshold.

In a possible design, if the second cache parameter includes the start threshold and the stop threshold, that the first device adjusts the second cache parameter includes: The first device decreases the start threshold and/or the stop threshold. In this way, compared with the second cache parameter before adjustment, a second cache parameter after adjustment may indicate the first device to start to drop the packet to be added to the second queue, when the total quantity of bytes of the packets cached in the second queue is smaller, or start to drop, based on a maximum drop probability, the packet to be added to the second queue, when the total quantity of bytes of the packets cached in the second queue is smaller. In this way, the first device may drop more packets to be added to the second queue, to increase the remaining cache space of the port on which the first queue is located.

In a possible design, the first device adjusts the second cache parameter based on packet drop statuses of the first queue in past several periods, to decrease a quantity of packets that are to be added to the second queue and that are dropped by the first device. For example, the first device adjusts the second cache parameter in a j^{th} period. The first device may obtain a packet drop parameter of the first queue in each of K periods ahead of the j^{th} period. If the packet drop parameter of the first queue in each of the K periods ahead of the j^{th} period is less than a fourth packet drop threshold, the first device may adjust the second cache parameter, for example, may increase the start threshold and/or the stop threshold, to decrease the quantity of packets that are to be added to the second queue and that are dropped by the first device. j and K are positive integers, and K is less than j. The fourth packet drop threshold may be equal to any one or more of the following: the first packet drop threshold, the second packet drop threshold, and the third packet drop threshold.

In a possible design, the first device performs a confidence level check on the parameter obtained through calculation. For example, after adjusting any one or more of the following: the first cache parameter, N, and the second cache parameter, the first device may perform the confidence level check on the parameters after adjustment. After the confidence level check succeeds, the first device controls the first queue based on the parameters after adjustment.

According to a second aspect, this application provides a queue control method. The method is applied to a first device, and the first device may be, for example, a network device such as a switch. A port of the first device has a first queue and a second queue. The first queue is for forwarding a packet of a mice flow, a quantity of packets included in the mice flow is less than or equal to N, N is an integer, and the second queue is for forwarding a packet of an elephant flow. For example, the queue control method includes: The first device first obtains a forwarding parameter of the first queue and a forwarding parameter of the second queue. The forwarding parameter may include an average packet length and/or a forwarding rate. Then, the first device may calculate a ratio of the forwarding parameter of the first queue to the forwarding parameter of the second queue, and compare the ratio obtained through calculation with an expected ratio. If the ratio obtained through calculation does not match the expected ratio, it indicates that division of the elephant flow and the mice flow is improper. In this case, the first device may adjust N to change quantities of packets entering the first queue and the second queue, and ensure a forwarding indicator of the mice flow. In this way, the packet of the elephant flow and the packet of the mice flow in the data flow can be better distinguished, to ensure reliability of packet forwarding of the mice flow.

According to a third aspect, this application provides a queue control method. The method is applied to a first device, and the first device may be, for example, a network device such as a switch. A port of the first device has a first queue and a second queue. The first queue is for forwarding a packet of a mice flow, a quantity of packets included in the mice flow is less than or equal to N, N is an integer, and the second queue is for forwarding a packet of an elephant flow. For example, the queue control method includes: The first device obtains a packet drop parameter of the first queue, and determines whether the packet drop parameter of the first queue is greater than a fourth packet drop threshold. The packet drop parameter of the first queue is determined based on a quantity of packets or a total quantity of bytes of packets that are dropped by the first device because the packets cannot be added to the first queue. For example, the packet drop parameter may be a total quantity of bytes of packets that are dropped by the first device in a specified period of time and that should be added to the first queue. The fourth packet drop threshold is a lower limit value for the first device to adjust a second cache parameter. If the packet drop parameter of the first queue is greater than the fourth packet drop threshold, it indicates that the first device drops a large quantity of packets because the packets cannot be added to the first queue. In this case, to reduce a probability that the packet is dropped, the first device may increase the second cache parameter, and probabilistically drop, based on the second cache parameter, a packet to be added to the second queue. In this way, cache space occupied by a packet cached in the second queue is decreased, and remaining cache space of a port on which the first queue is located is increased. Therefore, cache space that can be additionally occupied by the first queue is increased, which is equivalent to increasing a queue threshold of the first queue. In this way, the first queue can cache more packets, a probability that a packet to be added to the first queue is dropped is reduced, and reliability of packet forwarding of the mice flow is improved.

According to a fourth aspect, this application provides a queue control apparatus. The apparatus is used in a first device and includes one or more units configured to implement the method according to the first aspect and the implementations of the first aspect. The one or more units may be implemented by using software, hardware, or a combination of software and hardware.

According to a fifth aspect, this application provides a queue control apparatus. The apparatus is used in a first device and includes one or more units configured to implement the method according to the second aspect and the implementations of the second aspect. The one or more units may be implemented by using software, hardware, or a combination of software and hardware.

According to a sixth aspect, this application provides a queue control apparatus. The apparatus is used in a first device and includes one or more units configured to implement the method according to the third aspect and the implementations of the third aspect. The one or more units may be implemented by using software, hardware, or a combination of software and hardware.

According to a seventh aspect, this application provides a device. The device includes a processor and a memory. The memory is configured to store instructions or program code, and the processor is configured to invoke and run the instructions or the program code from the memory, to perform the queue control method according to any one of the first aspect, the second aspect, or the third aspect and the implementations of the first aspect, the second aspect, or the third aspect.

According to an eighth aspect, this application provides a chip, configured to perform the queue control method according to any one of the first aspect, the second aspect, or the third aspect and the implementations of the first aspect, the second aspect, or the third aspect.

According to a ninth aspect, this application provides a computer-readable storage medium, including instructions, a program, or code. When the instructions, the program, or the code is executed on a computer, the computer is enabled to perform the queue control method according to any one of the first aspect, the second aspect, or the third aspect and the implementations of the first aspect, the second aspect, or the third aspect.

According to a fifth aspect, an embodiment of this application provides a computer-readable storage medium, including instructions, a program, or code. When the instructions, the program, or the code is executed on a computer, the computer is enabled to perform the packet scheduling method according to the first aspect.

### BRIEF DESCRIPTION OF DRAWINGS

FIG. 1 is a schematic diagram of a structure of a network system according to an embodiment of this application;
FIG. 2 is a schematic flowchart of a queue control method according to an embodiment of this application;
FIG. 3 is another schematic flowchart of a queue control method according to an embodiment of this application;
FIG. 4 is a schematic diagram of a structure of a queue processing apparatus 400 according to an embodiment of this application;
FIG. 5 is a schematic diagram of a structure of a device 500 according to an embodiment of this application; and
FIG. 6 is a schematic diagram of a structure of a device 600 according to an embodiment of this application.

### DESCRIPTION OF EMBODIMENTS

The following describes a queue control method and device provided in embodiments of this application with reference to the accompanying drawings.

A device may include one or more egress ports, configured to send a packet to another device. Each egress port may correspond to one or more queues. A queue is for caching a packet that needs to be sent through an egress port on which the queue is located. For example, the device adds the packet that needs to be sent through the egress port to the tail of the queue, and schedules a packet at the head of the queue to be dequeued according to a queue scheduling algorithm. The packet that is scheduled to be dequeued is sent to the another device through the egress port. If a total quantity of bytes of packets cached in the queue reaches a queue threshold, the device rejects adding of a new packet to the queue. The total quantity of bytes of the packets cached in the queue is a sum of bytes of all packets cached in the queue. If the total quantity of bytes of the packets cached in the queue reaches the queue threshold, the device may drop the new packet after receiving the new packet.

If burst traffic occurs on a network, the device may receive a plurality of packets in a short period of time. Consequently, the packets cached in the queue increase. If the total quantity of bytes of the packets cached in the queue reaches the queue threshold and the burst traffic does still not end, the device drops some packets that need to be sent through the egress port. This increases a packet drop rate of the packet.

To resolve the foregoing problem, embodiments of this application provide a queue control method, to flexibly adjust a queue threshold of a queue, reduce a probability that a packet is dropped, and improve reliability of packet forwarding.

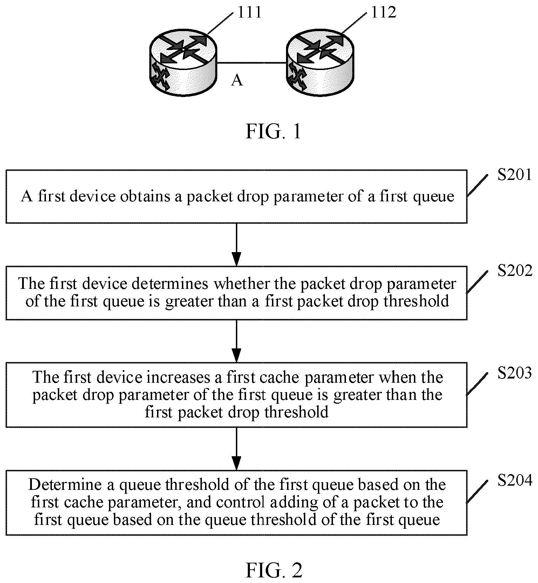

The queue control method provided in embodiments of this application may be applied to a network shown in FIG. 1. FIG. 1 is a schematic diagram of a structure of a network system according to an embodiment of this application. In FIG. 1, the network system includes a device 111 and a device 112. For example, the device 111 is connected to the device 112 through an egress port A. At least one queue is deployed on the egress port A. After packets cached in these queues are scheduled to be dequeued, the packets may be sent to the device 112 through the egress port A.

Optionally, the device 111 and the device 112 may be network devices having a forwarding function, for example, may be a forwarding device such as a router (router) or a switch (switch), or may be a device having a forwarding function, for example, a server or a terminal device. For example, in some possible implementations, the device 111 and the device 112 may be network devices in a data center network (data center network, DCN), for example, a leaf (leaf) switch or a spine (spine) switch in the DCN.

With reference to FIG. 2, the following describes the technical solutions provided in embodiments of this application. FIG. 2 is a schematic flowchart of a queue control method according to an embodiment of this application. The queue control method includes steps S201 to S204.

S201: A first device obtains a packet drop parameter of a first queue.

The first device and the first queue are first described.

In this embodiment of this application, the first device may be a network device configured to forward a packet in a network system. The first device includes a first port, and the first port corresponds to the first queue. For example, the first device may be the device 111 or the device 112 in the embodiment shown in FIG. 1. If the first device is the device 111 in the embodiment shown in FIG. 1, the first port may be a port A of the device 111, and the first queue may be a queue corresponding to the port A. Optionally, if the first port corresponds to a plurality of queues, the first queue may be any one of the plurality of queues corresponding to the first port. Optionally, a packet cached in the first queue and a second queue described below may be a data packet or a control packet.

It can be learned from the foregoing descriptions that the first device allows a total quantity of bytes of packets cached in the first queue not to exceed a queue threshold of the first queue. Optionally, storage space may be divided for the first queue, to control the total quantity of bytes of the packets cached in the first queue not to exceed the queue threshold of the first queue. For example, the storage space may be divided for the first queue based on the queue threshold of the first queue, to store a packet added to the first queue. In this way, after the total quantity of bytes of the packets cached in the first queue reaches the queue threshold of the first queue, the storage space of the first queue cannot continue to store a packet, and the first device may drop a subsequently received packet that needs to be scheduled by using the first queue. For example, a part of storage space may be divided from storage space corresponding to the first port of the first device, and is used as the storage space of the first queue. The storage space corresponding to the first port may be divided for the first port from a memory of the first device, or may be a memory associated with the first port on the first device. The memory may be, for example, a memory or a cache (cache). If the queue threshold of the first queue changes, the first device may adjust a size of the storage space divided for the first queue. Optionally, the storage space divided for the first queue may be referred to as a buffer (buffer) of the first queue.

The following describes the packet drop parameter of the first queue and a method for obtaining the packet drop parameter of the first queue by the first device.

In this embodiment of this application, the packet drop parameter of the first queue is determined based on a packet that is dropped because the packet cannot be added to the first queue. The packet that is dropped because the packet cannot be added to the first queue is a packet that should be added to the first queue originally but is dropped by the first device because the total quantity of bytes of the packets cached in the first queue reaches the queue threshold. Correspondingly, in a process of forwarding a packet, the first device may record related information of the packet that is dropped because the packet cannot be added to the first queue. In this way, the packet drop parameter of the first queue is obtained.

In a possible implementation, the first device may periodically calculate the packet drop parameter of the first queue. In this case, a packet drop parameter of the first queue in an i^{th} period may be a total quantity of bytes of packets that are dropped because the packets cannot be added to the first queue in the i^{th} period. Correspondingly, the first device may record, in the i^{th} period, the total quantity of bytes of the packets that are dropped because the packets cannot be added to the first queue. The total quantity of bytes is used as the packet drop parameter of the first queue in the i^{th} period. i is a positive integer.

Alternatively, the packet drop parameter of the first queue in the i^{th} period is a ratio of the total quantity of bytes of the packets that are dropped because the packets cannot be added to the first queue in the i^{th} period to a total quantity of bytes of packets that are scheduled to be dequeued from the first queue in the i^{th} period. In this case, the first device may record the total quantity of bytes of the packets that are scheduled to be dequeued from the first queue in the i^{th} period and the total quantity of bytes of the packets that are dropped because the packets cannot be added to the first queue in the i^{th} period.

In some other implementations, if lengths of packets scheduled by a device are equal, the packet drop parameter of the first queue may alternatively be determined based on a total quantity of packets that are dropped because the packets cannot be added to the first queue. For example, a packet drop parameter of the first queue in an i^{th} period may be a total quantity of packets that are dropped because the packets cannot be added to the first queue in the i^{th} period.

Optionally, after determining the packet drop parameter of the first queue in the i^{th} period, the first device may store the packet drop parameter of the first queue in the i^{th} period, so as to determine, in a subsequent process, whether a first cache parameter needs to be adjusted for the first queue.

It may be understood that the first queue may alternatively be a queue of a port of another device other than the first device. In other words, the first port on which the first queue is located may be an egress port of the another device other than the first device. In this case, the packet drop parameter of the first queue may be reported, to the first device, by a device to which the first queue belongs, or may be obtained by the first device through calculation based on other information reported by the device to which the first queue belongs. For example, the first device may be the device 112 in the embodiment shown in FIG. 1, and the first queue may be a queue of the port A in the device 111. Correspondingly, the device 111 may send the packet drop parameter of the first queue to the device 112. Alternatively, the device 111 may send, to the device 112, a total quantity of bytes of packets that are scheduled to be dequeued from the first queue in the i^{th} period and a total quantity of bytes of packets that are dropped because the packets cannot be added to the first queue in the i^{th} period, so that the device 112 calculates the packet drop parameter of the first queue. Correspondingly, the first device may be a server or a controller, and the device to which the first queue belongs may be a network device such as a switch.

S202: The first device determines whether the packet drop parameter of the first queue is greater than a first packet drop threshold.

After obtaining the packet drop parameter of the first queue, the first device may determine whether the packet drop parameter of the first queue is greater than the first packet drop threshold. The first packet drop threshold is a lower limit value for adjusting the queue threshold of the first queue. If the packet drop parameter of the first queue reaches the queue threshold of the first queue, it indicates that the packet drop parameter of the first queue is high, and a quantity of packets that are dropped by the first device because the packets cannot be added to the first queue is large. In this case, the first device may perform S203 to increase an upper limit value of the queue threshold of the first queue by increasing the first cache parameter, so as to increase the queue threshold of the first queue. In this way, the first queue can accommodate more packets, and a probability that a packet is dropped is reduced. Correspondingly, if the packet drop parameter of the first queue is less than or equal to the first packet drop threshold, the first device may not process the first cache parameter, or decrease the first cache parameter. For descriptions of this part of content, refer to the following description. Details are not described herein again.

It can be learned from the foregoing descriptions that the packet drop parameter of the first queue in the i^{th} period may be the total quantity of bytes of the packets that are dropped because the packets cannot be added to the first queue in the i^{th} period. In this case, a first threshold may be 0 bytes (bytes). In other words, if the first device drops any packet in the i^{th} period because the packets cached in the first queue reach the queue threshold of the first queue, the first device may adjust the first cache parameter to increase a queue threshold of the first queue in an (i+1)^{th} period.

S203: The first device increases the first cache parameter when the packet drop parameter of the first queue is greater than the first packet drop threshold.

After determining that the packet drop parameter of the first queue is greater than the first packet drop threshold, the first device may increase the first cache parameter. For example, the first device may increase the first cache parameter by one or double the first cache parameter, or the first device may increase the first cache parameter based on the packet drop parameter of the first queue. The first cache parameter is for adjusting the queue threshold of the first queue. For example, the first cache parameter may be for increasing the queue threshold of the first queue. In this case, as the first cache parameter increases, the queue threshold of the first queue also correspondingly increases. In other words, the total quantity of bytes of the packets that the first device allows to cache in the first queue is increased. In this way, even if a traffic burst occurs, because the queue threshold of the first queue increases, the first queue can accommodate more packets, and the probability that a packet is dropped is reduced.

The following describes the first cache parameter.

In an implementation, the first cache parameter indicates cache space that can be additionally occupied by the first queue. In this case, the queue threshold of the first queue may be a sum of the first cache parameter and cache space occupied by the first queue.

In another implementation, the first cache parameter indicates a ratio of the cache space that can be additionally occupied by the first queue to remaining cache space of the first port. The remaining cache space is cache space that is not occupied in total cache space of the first port. The total cache space of the first port is a sum of cache space of all queues corresponding to the first port, for example, may be cache space of a memory corresponding to the first port. In other words, the queue threshold of the first queue is a sum of the cache space occupied by the first queue and a value by which the queue threshold of the first queue may be increased, and the value by which the queue threshold of the first queue may be increased is equal to a product of the first cache parameter and remaining cache space of the first port at a current moment. It may be understood that the first port may correspond to a plurality of queues. In this case, the first cache parameter may indicate cache space that can be additionally preempted by the first queue from remaining cache space of the plurality of queues.

An example is used for description. It is assumed that the total cache space of the first port is 100 megabytes (megabytes, MB), 60 MB cache space of the first port is occupied at a moment T, and a proportion corresponding to the first cache parameter of the first queue is 0.25. In this case, the cache space that can be additionally occupied by the first queue is (100 - 60)*0.25 = 10 MB. If 20 MB cache space in the total cache space of the first port is occupied by the first queue at the moment T, a queue threshold of the first queue at the moment T is 10 + 20 = 30 MB. In this way, it is assumed that a traffic burst occurs in a data flow corresponding to a first packet near the moment T. Because the queue threshold of the first queue is 30 MB, as long as the burst traffic is less than 30 MB, the first device does not drop a packet because the packet cannot be added to the first queue, so that the probability that a packet is dropped is reduced.

Optionally, to avoid an excessively large queue threshold of the first queue which affects packet scheduling of another queue corresponding to the first port, an upper limit of the first cache parameter may be set. The upper limit of the first cache parameter may be referred to as an upper limit of a cache parameter. Before increasing the first cache parameter, the first device may determine that the first cache parameter is less than the upper limit of the cache parameter. If the first cache parameter is greater than or equal to the upper limit of the cache parameter, the first device may not increase the first cache parameter.

In some possible implementations, the foregoing first cache parameter may be represented by using a value of alpha (alpha, α). The value of α may be equal to the first cache parameter, or may correspond to the first cache parameter. For example, the value of α may be a natural number, and different values may correspond to different first cache parameters. For example, it is assumed that the first cache parameter indicates that the cache space that can be additionally occupied by the first queue accounts for 0.125 of the remaining cache space of the first port, the value of α may be equal to 0.125, or may be equal to 4. Optionally, in some possible implementations, 2 to the power of α minus 7 is a ratio of a cache size that can be additionally occupied by the first queue to a remaining cache size of the first port. In other words, if the value of α is 4, the ratio of the cache size that can be additionally occupied by the first queue to the remaining cache size of the first port is 2^(4 - 7) = 1/8. If the value of α is 5, the ratio of the cache size that can be additionally occupied by the first queue to the remaining cache size of the first port is 2^(5 - 7) = 1/4. Correspondingly, the upper limit of the cache parameter may be 8.

It can be learned from the foregoing descriptions that the first device may periodically obtain the packet drop parameter of the first queue. Correspondingly, the first device adjusts a first cache parameter in the (i+1)^{th} period based on the packet drop parameter of the first queue in the i^{th} period. In the (i+1)^{th} period, the first device may determine the queue threshold of the first queue based on the first cache parameter in the (i+1)^{th} period, and control adding of the packet to the first queue based on the queue threshold of the first queue. When the (i+1)^{th} period ends, the first device may obtain a first cache parameter in an (i+2)^{th} period through calculation based on the packet drop parameter of the first queue in the (i+1)^{th} period. In other words, the first device may determine, based on a packet drop parameter of the first queue in a previous period, a first cache parameter corresponding to the first queue in a current period, and control adding of the packet to the first queue based on the first cache parameter in the current period. In this way, historical packet drop data of the first queue is used to guide adjustment of the queue threshold of the first queue. This improves flexibility of adjusting the queue threshold of the first queue, and improves the reliability of packet forwarding.

S204: Determine the queue threshold of the first queue based on the first cache parameter, and control adding of a packet to the first queue based on the queue threshold of the first queue.

After determining the first cache parameter, the first device may determine the queue threshold of the first queue based on the first cache parameter, and control adding of the packet to the first queue based on the queue threshold of the first queue. For example, after receiving a first packet to be added to the first queue, the first device may obtain the total quantity of bytes of the packets cached in the first queue, and add the first packet to the first queue or drop the first packet based on the total quantity of bytes of the packets cached in the first queue. If the total quantity of bytes of the packets cached in the first queue is equal to the queue threshold of the first queue, the first device may drop the first packet, and reject adding of the first packet to the first queue. If the total quantity of bytes of the packets cached in the first queue is less than the queue threshold of the first queue, the first device may add the first packet to the tail of the first queue.

Alternatively, the first device may determine, based on a sum of the total quantity of bytes of the packets cached in the first queue and a quantity of bytes of the first packet, whether to allow adding of the first packet to the first queue. If the total quantity of bytes of the packets cached in the first queue is less than the queue threshold of the first queue, but the sum of the total quantity of bytes of the packets cached in the first queue and the quantity of bytes of the first packet is greater than the queue threshold of the first queue, the first device may also reject adding of the first packet to the first queue, and drop the first packet.

Optionally, before the first device determines the queue threshold of the first queue based on the first cache parameter, the first device may further determining a confidence lever of the first cache parameter first, to determine whether the first cache parameter can be used for determining the queue threshold of the first queue. For example, the first device may perform a confidence level check on the first cache parameter by using an upper confidence bounds applied to trees (Upper Confidence bounds applied to Trees, UCT) algorithm, and after the check succeeds, determine the queue threshold of the first queue based on the first cache parameter.

Optionally, after the packets cached in the first queue reach the queue threshold of the first queue, the first device may re-obtain remaining cache space of a port on which the first queue is located, and re-calculate the queue threshold of the first queue based on the first cache parameter.

It may be understood that, in a first period, the first device may calculate, based on a preconfigured first cache parameter, the queue threshold of the first queue.

In the foregoing description, the first queue is a queue on an egress port of the first device. It may be understood that if the first queue does not belong to the egress port of the first device, the first device may send the first cache parameter to the device to which the first queue belongs after determining the first cache parameter. In this case, S204 may be performed by the device to which the first queue belongs.

In this embodiment of this application, the first device may further decrease the first cache parameter, to decrease an upper limit to which the queue threshold of the first queue can be increased. In this way, maximum cache space that can be occupied by the first queue may be limited, so that the another queue corresponding to the first port can occupy more cache space.

In some possible implementations, the first device may determine, based on a size of the packet drop parameter of the first queue, whether the first cache parameter needs to be adjusted.

For example, in the foregoing S202, the first device determines whether the packet drop parameter of the first queue is greater than the first packet drop threshold. If the packet drop parameter of the first queue is less than or equal to the first packet drop threshold, the first device may further determine whether the packet drop parameter of the first queue is less than a second packet drop threshold. If the packet drop parameter of the first queue is less than the second packet drop threshold, the first device may decrease the first cache parameter. For example, the first device may decrease the first cache parameter by one or divide the first cache parameter by two, or the first device may decrease the first cache parameter based on the packet drop parameter of the first queue. The second packet drop threshold may be less than the first packet drop threshold, or may be equal to the first packet drop threshold. It can be learned from the foregoing descriptions that the first device may periodically obtain the packet drop parameter of the first queue. In this case, in some other implementations, the first device may obtain a packet drop parameter of the first queue in each of M periods ahead of the current period, and determine, based on the packet drop parameter of the first queue in each of the M periods ahead of the current period, whether the first cache parameter needs to be increased, where M is a positive integer. For example, the first device may obtain packet drop parameters that are of the first queue and that are stored in the past 20 periods. If the packet drop parameter of the first queue in each of the past 20 periods is less than the second packet drop threshold, the first device may decrease the first cache parameter.

In some possible implementations, the first device may further determine, with reference to a total quantity of bytes of packets cached in the first queue when a period ends, whether the first cache parameter needs to be decreased. For example, the first device may obtain a total quantity (where K is a positive integer) of bytes of packets cached in the first queue when each of K periods ahead of the current period ends, and determine, with reference to the total quantity of bytes of the packets cached in the first queue when each of the K periods ahead of the current period ends and the packet drop parameter, whether the first packet drop parameter needs to be decreased.

Optionally, K and M may be equal. In this case, when the i^{th} period ends, the first device may obtain a packet cache status of the first queue when each of M periods ahead of the i^{th} period ends, and a packet drop parameter of the first queue in each period when each of the M periods ahead of the i^{th} period ends. If the packet drop parameter of the first queue in each of the M periods ahead of the i^{th} period is less than the second packet drop threshold, and a total quantity of bytes of packets cached in the first queue when each of the M periods ahead of the i^{th} period ends is less than or equal to a specified threshold, the first device may decrease the first cache parameter of the first device.

In this embodiment of this application, the first device may send one or more data flows to a second device through the first port. The second device may be any device connected to the first device, and the first device is connected to the second device through the first port. For example, if the first device is the device 111 in FIG. 1, and the first port is the egress port A of the device 111, the second device may be the device 112 in FIG. 1.

In this embodiment of this application, the data flow may be a plurality of packets that are continuously sent by the device through a port and that have a same feature. The feature may be, for example, one or more of the following: a quintuple (that is, a source IP address, a destination IP address, a source port, a destination port, and a protocol number), or is a flow identifier included in a packet. If a sending interval between two packets having a same feature exceeds a specified period of time, the two packets may be considered as packets belonging to different data flows.

If the data flow is transmitted according to the transmission control protocol (Transmission Control Protocol, TCP), the first device may first establish a connection to the second device before sending a packet to the second device. Then, the first device may send one or more packets to the second device through the connection. After sending the packet, the first device may disconnect the connection to the second device. After disconnecting the connection, if the first device obtains a new packet that needs to be sent to the second device, the first device may re-establish a connection to the second device. Correspondingly, from establishing the connection to disconnecting the connection by the first device, all packets sent by the first device may be considered as packets in a same data flow.

In this embodiment of this application, the data flows may be classified into a mice flow and an elephant flow based on a quantity of packets included in the data flow. For example, a data flow including a quantity of packets less than or equal to N may be referred to as the mice flow, and a data flow including a quantity of packets more than N may be referred to as the elephant flow. The mice flow is for carrying a mice flow service, and the elephant flow is for carrying an elephant flow service. The elephant flow service has a high requirement on parameters related to a throughput (throughput), such as a goodput (goodput). The mice flow service has a high requirement on parameters such as FCT and queries per second (queries per second, QPS). Optionally, the first queue may be for forwarding a packet of the mice flow, and the second queue may be for forwarding a packet of the elephant flow. For convenience, in this application, a packet of the mice flow service may also be referred to as the packet of the mice flow, and a packet of the elephant flow service may also be referred to as the packet of the elephant flow.

In some possible implementations, a data flow forwarded by the first device may include the elephant flow and the mice flow. The elephant flow service and the mice flow service have different requirements. Therefore, scheduling the elephant flow and the mice flow in one queue at the same time may fail to ensure normal transmission of the mice flow service. In this embodiment of this application, the first device may add the first N packets in each data flow to the first queue as packets of the mice flow, and add other packets in the data flow other than the first N packets to the second queue as packets of the elephant flow. If a total quantity of packets of a data flow is less than N, all packets of the data flow enter the first queue. It may be understood that the packets of the elephant flow may be for carrying to-be-transmitted data. Therefore, in a data flow, there are a large quantity of packets of the elephant flow, and in each elephant flow, there are a large quantity of bytes of packets. The second queue belongs to the first port. For example, the second queue may be a queue whose identifier is 3 in the first port. Optionally, a scheduling priority of the second queue is lower than a scheduling priority of the first queue.

However, in a network such as a DCN, frequency of the traffic burst is high, and a large quantity of microburst phenomena exist. After the traffic burst occurs, the first device may receive a plurality of data flows in a short period of time. In this way, if the first device adds the first N packets of each data flow in the plurality of data flows to the first queue as the packets of the mice flow, and consequently the total quantity of bytes of the packets cached in the first queue reaches the queue threshold of the first queue, the first device may drop a subsequently received packet of the mice flow, so that a parameter such as an FCT of the packet of the mice flow is affected.

According to the queue control method provided in this embodiment of this application, the first device may adjust the first cache parameter based on the packet drop parameter of the first queue. If packet drop occurs in the first queue in the previous period, the first device may increase the first cache parameter. In this way, in a next period, if a traffic burst occurs in the packet of the mice flow, and the first device receives a large quantity of packets of the mice flow, the first device may determine, based on the first cache parameter, cache space that can be additionally occupied by the first queue, to increase the queue threshold of the first queue, so that the first queue can accommodate more packets of the mice flow, thereby avoiding dropping the packets of the mice flow because the packets cached in the first queue reach the queue threshold of the first queue. In this way, the first device may adjust the queue threshold of the first queue based on a packet drop status of the first queue, so that the queue threshold of the first queue may be flexibly adjusted based on a packet transmission status of the mice flow. This reduces a probability that the packet of the mice flow is dropped, and improves reliability of packet forwarding of the mice flow.

Further, if a network device determines, based on a fixed N, a quantity of packets that are in each data flow and that are added to the first queue, the packet of the elephant flow may be added to the first queue, or the packet of the mice flow may be added to the second queue. In this embodiment of this application, the packet added to the first queue is considered as the packet of the mice flow, and the packet added to the second queue is considered as the packet of the elephant flow. In other words, if the packet of the elephant flow service is added to the first queue, the first device considers the packet of the elephant flow service as a packet of the mice flow for scheduling; if the packet of the mice flow service is added to the second queue, the first device considers the packet of the mice flow service as a packet of the elephant flow for scheduling. In this way, confusion between the packet of the elephant flow service and the packet of the mice flow service may affect transmission of the packet of the mice flow.

FIG. 1 is used as an example for description. It is assumed that the device 111 transmits two data flows: a data flow X and a data flow Y through the egress port A. The data flow X includes 10 packets, and the data flow Y includes 20 packets. If a value of the device 111 for distinguishing the packet of the mice flow from the packet of the elephant flow is N = 15, all the 10 packets of the data flow X are added to the first queue, 15 packets of the data flow Y are also added to the first queue. However, only five packets of the data flow Y are added to the second queue. In this case, scheduling of the first queue is slower. It can be learned that, if a value of N for distinguishing the packet of the elephant flow from the packet of the mice flow is fixed, normal transmission of the packet of the mice flow may be affected.

Therefore, based on the adjustment of the first cache parameter, the queue control method provided in this embodiment of this application may be further used to adjust N that is for distinguishing the mice flow from the elephant flow. The following provides details.

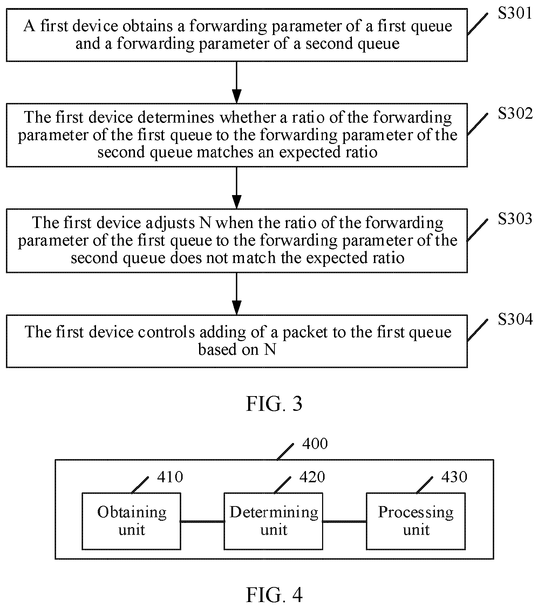

FIG. 3 is another schematic flowchart of a queue control method according to an embodiment of this application. The method includes steps S301 to S304.

S301: A first device obtains a forwarding parameter of a first queue and a forwarding parameter of a second queue.

To determine whether a value of N for distinguishing an elephant flow from a mice flow is proper, the first device may first obtain the forwarding parameter of the first queue and the forwarding parameter of the second queue. The forwarding parameter of the first queue may include an average packet length of the first queue and/or a forwarding rate of the first queue. Similarly, the forwarding parameter of the second queue may include an average packet length of the second queue and/or a forwarding rate of the second queue. The following uses the first queue as an example to describe the average packet length and the forwarding rate.

The average packet length is an average quantity of bytes of packets that are scheduled to be dequeued. In other words, the average packet length of the first queue is an average quantity of bytes of packets dequeued from the first queue. Correspondingly, the first device may record a quantity of packets dequeued from the first queue and a quantity of bytes of each packet. Then, the first device may sum up quantities of bytes of a plurality of packets, and divide a result obtained through summation by the quantity of packets dequeued from the first queue. An obtained result is the average packet length of the first packet.

The forwarding rate is a quantity of bytes that are scheduled to be dequeued from a queue in a specified period of time. In other words, the forwarding rate of the first queue is a quantity of bytes of packets dequeued from the first queue in the specified period of time. Correspondingly, the first device may record a quantity of bytes of each packet dequeued from the first queue in a period of time. Then, the first device may sum up quantities of bytes of a plurality of packets in this period of time, and divide a result obtained through summation by this period of timed. An obtained result is the forwarding rate of the first packet.

It can be learned from the foregoing descriptions that the first device may periodically obtain a packet drop parameter of the first queue. Similarly, the first device may also periodically calculate the forwarding parameter of the first queue. For example, the first device may record a related parameter of a packet that is scheduled to be dequeued from the first queue in a period, and obtain a forwarding parameter of the packet in the period through calculation. For example, the first device may record a total quantity of packets that are scheduled to be dequeued from the first queue in an i^{th} period and a quantity of bytes of each packet. Based on this, the first device may obtain an average packet length of the first queue in the i^{th} period through calculation. With reference to duration of a period, the first device may alternatively obtain a forwarding rate of the first queue in the i^{th} period through calculation.

For a method for calculating the forwarding parameter of the second queue, refer to the foregoing method for calculating the forwarding parameter of the first queue. Details are not described herein again.

It may be understood that the foregoing method for calculating the forwarding parameter of the first queue and the forwarding parameter of the second queue may be performed by the first device, or may be performed by another device. If the foregoing calculation method is performed by a third device, that the first device obtains the forwarding parameter of the first queue and the forwarding parameter of the second queue may include: The first device receives the forwarding parameter of the first queue and the forwarding parameter of the second queue that are sent by the third device.

S302: The first device determines whether a ratio of the forwarding parameter of the first queue to the forwarding parameter of the second queue matches an expected ratio.

After obtaining the forwarding parameter of the first queue and the forwarding parameter of the second queue, the first device may calculate the ratio of the forwarding parameter of the first queue to the forwarding parameter of the second queue, and determine whether the ratio of the forwarding parameter of the first queue to the forwarding parameter of the second queue matches the expected ratio. If the ratio of the forwarding parameter of the first queue to the forwarding parameter of the second queue matches the expected ratio, the first device may not adjust N. If the ratio of the forwarding parameter of the first queue to the forwarding parameter of the second queue does not match the expected ratio, the first device may perform S303 to adjust N.

Optionally, that the ratio of the forwarding parameter of the first queue to the forwarding parameter of the second queue does not match the expected ratio may include that the ratio of the forwarding parameter of the first queue to the forwarding parameter of the second queue exceeds a trusted range of the expected ratio. The trusted range of the expected ratio is a range that uses the expected ratio as a reference and that fluctuates in a small range. For example, assuming that the expected ratio is 0.25 and the trusted range is 4%, the trusted range of the expected ratio may be [0.24 0.26].

If the ratio of the forwarding parameter of the first queue to the forwarding parameter of the second queue is less than an upper limit value of the trusted range of the expected ratio, and the ratio of the forwarding parameter of the first queue to the forwarding parameter of the second queue is greater than a lower limit value of the trusted range of the expected ratio, the first device may determine that the ratio of the forwarding parameter of the first queue to the forwarding parameter of the second queue matches the expected ratio.

If the ratio of the forwarding parameter of the first queue to the forwarding parameter of the second queue is greater than the upper limit value of the trusted range of the expected ratio, or the ratio of the forwarding parameter of the first queue to the forwarding parameter of the second queue is less than the lower limit value of the trusted range of the expected ratio, the first device may determine that the ratio of the forwarding parameter of the first queue to the forwarding parameter of the second queue does not match the expected ratio.

S303: The first device adjusts N when the ratio of the forwarding parameter of the first queue to the forwarding parameter of the second queue does not match the expected ratio.

It can be learned from the descriptions in S301 that a forwarding parameter may include an average packet length and/or a forwarding rate, which are separately described below.

In a first implementation, the forwarding parameter includes the average packet length. In this case, the first device may calculate a ratio of the average packet length of the first queue to the average packet length of the second queue. If the ratio of the average packet length of the first queue to the average packet length of the second queue is higher, it indicates that an average quantity of bytes of packets in the first queue is greater than an average quantity of bytes of packets in the second queue. In an actual application scenario, a length of a packet of the mice flow is usually far less than a length of a packet of the elephant flow. If the first queue is only for scheduling the packet of the mice flow, the average packet length of the first queue should be far less than the average packet length of the second queue.

Therefore, if the ratio of the average packet length of the first queue to the average packet length of the second queue is greater than the expected ratio, it indicates that the average packet length of the first queue is greater than an average packet length of the packet of the mice flow, and the packet of the elephant flow exists in the first queue. In other words, the first device adds packets of some elephant flows in a first data flow to the first queue, where N is greater than a quantity of packets of the mice flow in the first data flow. In this case, the first device may decrease N, to prevent the packet of the elephant flow from being added to the first queue.

Contrarily, if the ratio of the average packet length of the first queue to the average packet length of the second queue is less than the expected ratio, it indicates that the average packet length of the second queue is less than an average packet length of the packet of the elephant flow, and the packet of the mice flow exists in the second queue. In other words, the first device adds packets of some mice flows in the first data flow to the second queue, where N is less than a quantity of packets of the mice flow in the first data flow. In this case, the first device may increase N, to prevent the packet of the mice flow from being added to the second queue.

In a second implementation, the forwarding parameter includes the forwarding rate. In this case, the first device may calculate a ratio of the forwarding rate of the first queue to the forwarding rate of the second queue. If the ratio of the forwarding rate of the first queue to the forwarding rate of the second queue is higher, it indicates that a forwarding rate of a packet in the first queue is faster than a forwarding rate of packets in the second queue.

In an actual application scenario, a quantity of packets of the mice flow and a total quantity of bytes of the packets of the mice flow are far less than a quantity of packets of the elephant flow. Therefore, a bandwidth occupied by the packet of the mice flow sent by the first device should be less than a bandwidth occupied by the packet of the elephant flow sent by the first device.

If the ratio of the forwarding rate of the first queue to the forwarding rate of the second queue is greater than the expected ratio, it indicates that a bandwidth occupied by the first queue is greater than a bandwidth that needs to be occupied to forward the packet of the mice flow, and the packet of the elephant flow exists in the first queue. In other words, the first device adds packets of some elephant flows to the first queue. In this case, the first device may decrease N, to decrease a quantity of packets added to the first queue, and prevent the packet of the elephant flow from being added to the first queue.

If the ratio of the forwarding rate of the first queue to the forwarding rate of the second queue is less than the expected ratio, it indicates that a bandwidth occupied by the second queue is less than a bandwidth that needs to be occupied to forward the packet of the elephant flow, and the packet of the mice flow exists in the second queue. In other words, the first device adds packets of some mice flows to the second queue, and N cannot properly divide the elephant flow and the mice flow. In this case, the first device may increase N, to increase a quantity of packets added to the first queue, to prevent the packet of the mice flow from being added to the second queue.

It can be learned from the foregoing descriptions that, that the ratio of the forwarding parameter of the first queue to the forwarding parameter of the second queue does not match the expected ratio may include that the ratio of the forwarding parameter of the first queue to the forwarding parameter of the second queue exceeds the trusted range of the expected ratio. Correspondingly, that the ratio of the average packet length of the first queue to the average packet length of the second queue is greater than the expected ratio includes that the ratio of the average packet length of the first queue to the average packet length of the second queue is greater than the upper limit value of the trusted range of the expected ratio; that the ratio of the average packet length of the first queue to the average packet length of the second queue is less than the expected ratio includes that the ratio of the average packet length of the first queue to the average packet length of the second queue is less than the lower limit value of the trusted range of the expected ratio; that the ratio of the forwarding rate of the first queue to the forwarding rate of the second queue is greater than the expected ratio includes that the ratio of the forwarding rate of the first queue to the forwarding rate of the second queue is greater than the upper limit value of the trusted range of the expected ratio; and that the ratio of the forwarding rate of the first queue to the forwarding rate of the second queue is less than the expected ratio includes that the ratio of the forwarding rate of the first queue to the forwarding rate of the second queue is less than the lower limit value of the trusted range of the expected ratio.

Similar to the first cache parameter, after obtaining N through calculation, the first device may also perform a confidence level check on N.

S304: The first device controls, based on N, adding of a packet to the first queue.

After determining N, the first device may control, based on N, adding of the packet to the first queue or the second queue. For example, the first device receives a new data flow that needs to be sent through a first port. The first device may add first N packets of the data flow to the first queue based on N after adjustment, and add other packets in the data flow other than the first N packets to the second queue.

It may be understood that, in a first period, the first device may control, based on a preconfigured N, adding of a packet of the data flow to the first queue or the second queue.

In this way, the value of N for distinguishing the packet of the elephant flow from the packet of the mice flow may be adjusted based on a status of the data flow forwarded by the first device, so that a probability that the packet of the mice flow is added to the second queue and a probability that the packet of the elephant flow is added to the first queue can be reduced, and reliability of packet forwarding is improved.

It may be understood that the foregoing technical solution of adjusting N may be implemented based on the technical solution of adjusting the first cache parameter shown in FIG. 2, or may be independently implemented.

In this embodiment of this application, to avoid that the packet of the mice flow is dropped because the packet of the mice flow cannot be added to the first queue, the first device may adjust the first cache parameter. The first cache parameter is a ratio of cache space that can be further occupied by the first queue to remaining cache space of the first port. In this way, the first queue may occupy more cache space after a traffic burst occurs in the packet of the mice flow, to accommodate a burst packet of the mice flow.

However, if another queue (for example, the second queue) of the first port occupies large cache space, the remaining cache space of the first port may be small. In this case, even if the first device increases the first cache parameter, remaining cache space that can be occupied by the first queue is limited, and there is still a possibility that the first device drops the packet of the mice flow because the packet of the mice flow cannot be added to the first queue.

It can be learned from the foregoing descriptions that after a total quantity of bytes of packets cached in the first queue reaches a queue threshold of the first queue, the first device may drop a new packet to be added to the first queue. Similarly, the second queue may also have a queue threshold. After a total quantity of bytes of packets cached in the second queue reaches a queue threshold of the second queue, the first device may drop a new packet to be added to the second queue. To resolve the foregoing problem, in this embodiment of this application, before the total quantity of bytes of the packets cached in the second queue reaches the queue threshold of the second queue, the first device may drop some packets to be added to the second queue. In this way, cache space occupied by the second queue is decreased, and the remaining cache space of the first port is increased, so that cache space that can be occupied by the first queue is increased, and reliability of packet forwarding of the mice flow is improved.

Optionally, the first device may determine a drop probability based on a second cache parameter, and then drop, based on the drop probability, a packet to be added to the second queue.

In some possible implementations, the first device adjusts the second cache parameter based on the packet drop parameter of the first queue. For example, the first device may compare a size of the packet drop parameter of the first queue with a size of a third packet drop threshold. The third packet drop threshold may be equal to the first packet drop threshold or the second packet drop threshold. If the packet drop parameter of the first queue is greater than the third packet drop threshold, the first device may adjust the second cache parameter, to increase a probability that the first device drops the packet to be added to the second queue.

For example, the first device may probabilistically drop, according to a WRED algorithm, some packets to be added to the second queue. Correspondingly, the second cache parameter may include a start threshold (which is also referred to as a low threshold) and a stop threshold (which is also referred to as a high threshold). Optionally, the second cache parameter may further include a maximum drop probability.

For example, when the packet cached in the second queue reaches a start threshold of the WRED algorithm, the first device may determine a drop probability based on the total quantity of bytes of the packets cached in the second queue, and drop, based on the drop probability, the packet to be added to the second queue. As the packet is added to the second queue, the total quantity of bytes of the packets cached in the second queue gradually increases, and a probability that the first device drops a packet also gradually increases. After the total quantity of bytes of the packets cached in the second queue reaches the stop threshold, the first device may drop, based on a fixed probability, the packet to be added to the second queue. As the total quantity of bytes of the packets cached in the second queue further increases, the total quantity of bytes of the packets cached in the second queue reaches the queue threshold of the second queue, and the first device may drop all packets to be added to the second queue. Optionally, the fixed probability may be referred to as the maximum drop probability. The stop threshold may be equal to the queue threshold of the second queue.

Correspondingly, if the packet drop parameter of the first queue is greater than the third packet drop threshold, the first device may decrease the start threshold and/or the stop threshold in the second cache parameter. In this way, compared with the second cache parameter before decrease, the first device may start to drop the packet to be added to the second queue, when the total quantity of bytes of the packets cached in the second queue is smaller, or drop, based on a maximum drop probability, the packet to be added to the second queue, when the total quantity of bytes of the packets cached in the second queue is smaller. The first device may alternatively increase the foregoing maximum drop probability when the packet drop parameter of the first queue is greater than the third packet drop threshold. In this way, a probability that the packet to be added to the second queue is dropped is increased, the cache space occupied by the second queue is decreased, and the remaining cache space of the first port is increased, so that the first queue can occupy more cache space, and the reliability of packet forwarding of the mice flow is improved.

In some possible implementations, a plurality of groups of second cache parameters may be configured. Different groups of second cache parameters may have different start thresholds and/or stop thresholds. If the packet drop parameter of the first queue is greater than the third packet drop threshold, the first device may select a second cache parameter whose start threshold and/or stop threshold are/is less than a current second cache parameter as a second cache parameter in a next period. In other words, the first device may have a plurality of levels of second cache parameters, and perform adjustment based on the packet drop parameter of the first queue in the plurality of levels of the second cache parameters.

It may be understood that, in the first period, the first device may control, based on a preconfigured second cache parameter, adding of the packet to the second queue. Optionally, a start threshold of the preconfigured second cache parameter may be two-thirds of the queue threshold of the second queue, and a stop threshold of the preconfigured second cache parameter may be the queue threshold of the second queue.

In this embodiment of this application, to reduce a probability that the packet of the elephant flow is dropped, the first device may also increase the start threshold and the stop threshold in the second cache parameter. For example, the first device may determine whether the packet drop parameter of the first queue is greater than a fourth packet drop threshold in K periods ahead of a current period. The fourth packet drop threshold may be equal to the third packet drop threshold. If the packet drop parameter of the first queue is not greater than the fourth packet drop threshold in the K periods ahead of the current period, it indicates that a probability that the packet of the mice flow is dropped in past K periods is low. The first device may increase the start threshold and/or the stop threshold, to reduce the probability that the packet to be added to the second queue is dropped, and improve reliability of packet forwarding of the elephant flow.

Similar to the foregoing method for decreasing the first cache parameter by the first device, the first device may increase, in the K periods ahead of the current period, the start threshold and/or the stop threshold after determining that the packet drop parameter of the first queue is not greater than the fourth packet drop threshold, and that the total quantity of bytes of the packets cached in the first queue is less than or equal to the specified threshold when each period ends. For a specific method for determining and adjusting by the first device, refer to the foregoing description. Details are not described herein again.

It may be understood that the technical solution of adjusting the second cache parameter may be implemented based on the technical solution of adjusting the first cache parameter shown in FIG. 2 and/or the technical solution of adjusting N shown in FIG. 3, or may be independently implemented.

Refer to FIG. 4. An embodiment of this application further provides a queue control apparatus 400. The queue control apparatus 400 may implement a function of the first device in the embodiment shown in FIG. 2 or FIG. 3. The queue control apparatus 400 includes an obtaining unit 410, a determining unit 420, and a processing unit 430. The obtaining unit 410 is configured to implement S201 in the embodiment shown in FIG. 2 or S301 in the embodiment shown in FIG. 3. The determining unit 420 is configured to implement S202 in the embodiment shown in FIG. 2 or S302 in the embodiment shown in FIG. 3. The processing unit 430 is configured to implement S203 and S204 in the embodiment shown in FIG. 2, or S303 and S304 in the embodiment shown in FIG. 3.

Specifically, the obtaining unit 410 is configured to obtain a packet drop parameter of a first queue, where the packet drop parameter of the first queue is determined based on a packet that is dropped because the packet cannot be added to the first queue.

The determining unit 420 is configured to determine whether the packet drop parameter of the first queue is greater than a first packet drop threshold.

The processing unit 430 is configured to increase a first cache parameter when the packet drop parameter of the first queue is greater than the first packet drop threshold, where the first cache parameter is for adjusting a queue threshold of the first queue, and the queue threshold of the first queue indicates a maximum total quantity of bytes of packets that are allowed to be cached in the first queue.

Alternatively, the obtaining unit 410 is configured to determine a forwarding parameter of the first queue and a forwarding parameter of a second queue, where the first queue and the second queue belong to a same port, a packet in the first queue includes first N packets that are in a target data flow and that are forwarded by the first device, the target data flow corresponds to the second queue, N is a positive integer, and the forwarding parameter includes an average packet length and/or a forwarding rate.

The determining unit 420 is configured to determine whether a ratio of the forwarding parameter of the first queue to the forwarding parameter of the second queue matches an expected ratio.

The processing unit 430 is configured to adjust N when the ratio of the forwarding parameter of the first queue to the forwarding parameter of the second queue is different from the expected ratio.

Alternatively, the obtaining unit 410 is configured to obtain the packet drop parameter of the first queue, where the packet drop parameter of the first queue is determined based on the packet that is dropped because the packet cannot be added to the first queue, the first queue and the second queue belong to the same port, the packet in the first queue includes the first N packets that are in the target data flow and that are forwarded by the first device, the target data flow corresponds to the second queue, and N is the positive integer.

The determining unit 420 is configured to determine whether the packet drop parameter of the first queue is greater than a fourth packet drop threshold.

The processing unit 430 is configured to adjust a second cache parameter when the packet drop parameter of the first queue is greater than the fourth packet drop threshold, and probabilistically drop, based on the second cache parameter, a packet to be added to the second queue.

For a specific execution process, refer to detailed descriptions of corresponding steps in the embodiment shown in FIG. 2 or in FIG. 3. Details are not described herein again.

It should be noted that, in this embodiment of this application, division into the units is an example, and is merely a logical function division. In actual implementation, another division manner may be used. Functional units in embodiments of this application may be integrated into one processing unit, or each of the units may exist alone physically, or two or more units are integrated into one unit. For example, in the foregoing embodiment, the processing unit and a sending unit may be a same unit or different units. The integrated unit may be implemented in a form of hardware, or may be implemented in a form of a software functional unit.

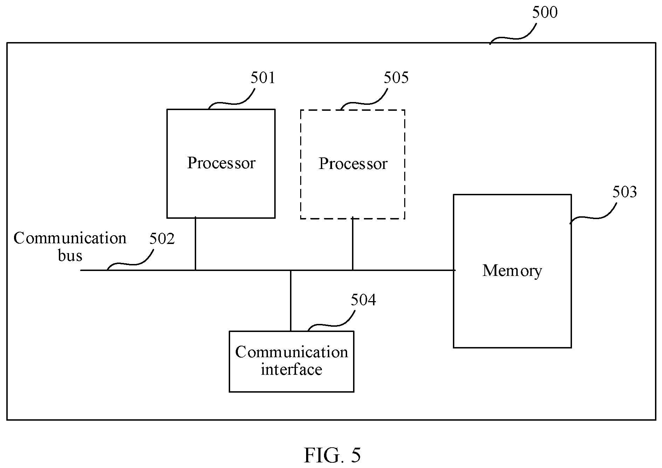

FIG. 5 is a schematic diagram of a structure of a device 500 according to an embodiment of this application. The foregoing queue control apparatus 400 may be implemented by using the device shown in FIG. 5. Refer to FIG. 5. The device 500 includes at least one processor 501, a communication bus 502, and at least one communication interface 504. Optionally, the device 500 may further include a memory 503.

The processor 501 may be a general-purpose central processing unit (central processing unit, CPU), an application-specific integrated circuit (application-specific integrated circuit, ASIC), or one or more integrated circuits (integrated circuits, ICs) for controlling program execution of the solutions of this application. The processor 501 may be configured to process a packet or a parameter, to implement the queue control method provided in embodiments of this application.

For example, when the first device in FIG. 2 is implemented by using the device shown in FIG. 5, the processor may be configured to:
obtain a packet drop parameter of a first queue, where the packet drop parameter of the first queue is determined based on a packet that is dropped because the packet cannot be added to the first queue; determine whether the packet drop parameter of the first queue is greater than a first threshold; and when the packet drop parameter of the first queue is greater than the first threshold, increase a first cache parameter, where the first cache parameter is for adjusting a queue threshold of the first queue, and the queue threshold of the first queue indicates a maximum total quantity of bytes of data packets that are allowed to be cached in the first queue.

The communication bus 502 is configured to transmit information among the processor 501, the communication interface 504, and the memory 503.

The memory 503 may be a read-only memory (read-only memory, ROM) or another type of static storage device that may store static information and instructions. The memory 503 may alternatively be a random access memory (random access memory, RAM) or another type of dynamic storage device that may store information and instructions, or may be a compact disc read-only memory (compact disc read-only memory, CD-ROM) or another optical disc storage, an optical disc storage (including a compact disc, a laser disc, an optical disc, a digital versatile optical disc, a Blu-ray disc, and the like), a magnetic disk storage medium or another magnetic storage device, or any other medium that can be configured to carry or store expected program code in a form of an instruction or a data structure and that can be accessed by a computer, but is not limited thereto. The memory 503 may exist independently, and is connected to the processor 501 through the communication bus 502. The memory 503 may alternatively be integrated with the processor 501.

Optionally, the memory 503 is configured to store program code or instructions for executing the technical solutions provided in embodiments of this application, and the processor 501 controls the execution. The processor 501 is configured to execute the program code or the instructions stored in the memory 503. The program code may include one or more software modules. Optionally, the processor 501 may alternatively store the program code or the instructions for executing the technical solutions provided in embodiments of this application. In this case, the processor 501 does not need to read the program code or the instructions from the memory 503.

The communication interface 504 may be an apparatus such as a transceiver, and is configured to communicate with another device or a communication network. The communication network may be an Ethernet, a radio access network (radio access network, RAN), a wireless local area network (wireless local area network, WLAN), or the like. The communication interface 504 may be an Ethernet (Ethernet) interface, a fast Ethernet (fast Ethernet, FE) interface, a gigabit Ethernet (gigabit Ethernet, GE) interface, or the like.

During specific implementation, in an embodiment, the device 500 may include a plurality of processors, for example, the processor 501 and a processor 505 in FIG. 5. Each of the processors may be a single-core (single-CPU) processor, or may be a multi-core (multi-CPU) processor. The processor herein may be one or more devices, circuits, and/or processing cores configured to process data (for example, computer program instructions).

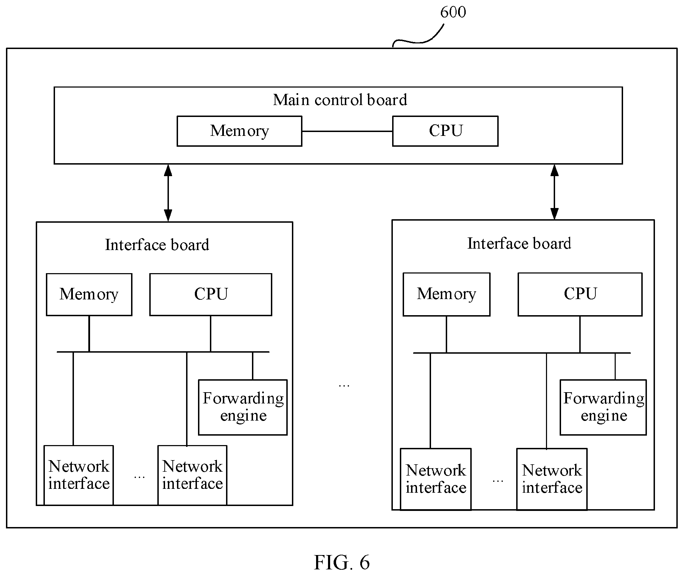

FIG. 6 is a schematic diagram of a structure of a device 600 according to an embodiment of this application. The first device in FIG. 2 or FIG. 3 may be implemented by using the device shown in FIG. 6. Refer to the schematic diagram of the structure of the device shown in FIG. 6, the device 600 includes a main control board and one or more interface boards. The main control board is communicatively connected to the interface board. The main control board is also referred to as a main processing unit (main processing unit, MPU) or a route processor card (route processor card). The main control board includes a CPU and a memory, and is responsible for controlling and managing each component in the device 600, including functions of route calculation and device management and maintenance. The interface board is also referred to as a line processing unit (line processing unit, LPU) or a line card (line card), and is configured to receive and send packets. In some embodiments, the main control board communicates with the interface board through a bus, or the interface boards communicate with each other through a bus. In some embodiments, the interface boards communicate with each other through a switching board. In this case, the device 600 also includes the switching board. The switching board is communicatively connected to the main control board and the interface boards, and is configured to forward data between the interface boards. The switching board may also be referred to as a switch fabric unit (switch fabric unit, SFU). The interface board includes a CPU, a memory, a forwarding engine, and an interface card (interface card, IC). The interface card may include one or more communication interfaces. The communication interface may be an Ethernet interface, an FE interface, a GE interface, or the like. The CPU is communicatively connected to the memory, the forwarding engine, and the interface card. The memory is configured to store a forwarding table. The forwarding engine is configured to forward a received packet based on the forwarding table stored in the memory. If a destination address of the received packet is an IP address of the device 600, the forwarding engine sends the packet to the CPU of the main control board or the CPU of the interface board for processing. If a destination address of the received packet is not an IP address of the device 600, the forwarding engine searches the forwarding table based on the destination address. If a next hop and an egress interface that correspond to the destination address are found from the forwarding table, the forwarding engine forwards the packet to the egress interface that corresponds to the destination address. The forwarding engine may be a network processor (network processor, NP). The interface card, also referred to as a subcard, may be installed on the interface board. The interface card is responsible for converting an optical/electrical signal into a data frame, checking validity of the data frame, and forwarding the data frame to the forwarding engine for processing or the CPU of the interface board. In some embodiments, the CPU may also perform functions of the forwarding engine, such as implementing software forwarding based on a general-purpose CPU, so that no forwarding engine is required in the interface board. In some embodiments, the forwarding engine may be implemented by using an ASIC or a field programmable gate array (field programmable gate array, FPGA). In some embodiments, the memory that stores the forwarding table may alternatively be integrated into the forwarding engine, and is used as a part of the forwarding engine.

An embodiment of this application further provides a chip system, including a processor. The processor is coupled to a memory, and the memory is configured to store a program or instructions. When the program or the instructions are executed by the processor, the chip system is enabled to implement the queue control method performed by the first network device in the embodiment shown FIG. 2.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this application.

For example, the chip system may be an FPGA, an ASIC, a system on chip (system on chip, SoC), a CPU, an NP, a digital signal processing circuit (digital signal processor, DSP), a micro controller unit (micro controller unit, MCU), a programmable logic device (programmable logic device, PLD), or another integrated chip.

It should be understood that the steps in the foregoing method embodiments may be completed by using a hardware integrated logic circuit or instructions in a form of software in the processor. The steps of the methods disclosed with reference to embodiments of this application may be directly performed by a hardware processor, or may be performed by a combination of hardware in the processor and a software module.

An embodiment of this application further provides a computer-readable storage medium, including instructions, and when the instructions are run on a computer, the computer is enabled to perform the queue control method that is provided in the foregoing method embodiments and that is performed by the first device.

An embodiment of this application further provides a computer program product including instructions, and when the computer program product runs on a computer, the computer is enabled to perform the queue control method that is provided in the foregoing method embodiments and that is performed by the first device.

In the specification, claims, and accompanying drawings of this application, the terms "first", "second", "third", "fourth", and the like (if existent) are intended to distinguish between similar objects but do not necessarily indicate a specific order or sequence. It should be understood that the data termed in such a way are interchangeable in proper circumstances so that embodiments of the present invention described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

It may be clearly understood by persons skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, division into the units is merely logical module division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be obtained based on actual requirements to achieve the objectives of the solutions of embodiments.

In addition, module units in embodiments of this application may be integrated into one processing unit, or each of the units may exist alone physically, or two or more units are integrated into one unit. The integrated unit may be implemented in a form of hardware, or may be implemented in a form of a software module unit.

When the integrated unit is implemented in the form of the software module unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a ROM, a RAM, a magnetic disk, or an optical disc.

## Claims

1. A queue control method, wherein the method comprises:
obtaining (S201), by a first device, a packet drop parameter of a first queue, wherein the packet drop parameter of the first queue is determined based on a packet that is dropped because the packet cannot be added to the first queue;and
increasing (S203), by the first device, a first cache parameter when the packet drop parameter of the first queue is greater than a first packet drop threshold, wherein the first cache parameter is for adjusting a queue threshold of the first queue, and the queue threshold of the first queue indicates a maximum total quantity of bytes of packets that are allowed to be cached in the first queue;
wherein when the packet drop parameter of the first queue is less than or equal to the first packet drop threshold, the method further comprises:
decreasing, by the first device, the first cache parameter when the packet drop parameter of the first queue is less than a second packet drop threshold, wherein the second packet drop threshold is less than or equal to the first packet drop threshold; the method being **characterized in that**
the packet drop parameter of the first queue is a packet drop parameter of the first queue in an i^{th} period, i is a positive integer, and before the decreasing the first cache parameter, the method further comprises:
obtaining, by the first device, a packet drop parameter of the first queue in each of M periods ahead of the i^{th} period, wherein M is a positive integer less than i; and
determining, by the first device, that the packet drop parameter of the first queue in each of the M periods ahead of the i^{th} period is less than the second packet drop threshold.

2. The method according to claim 1, wherein the first cache parameter indicates a ratio of cache space that can be occupied by the first queue to remaining cache space of a port on which the first queue is located, and the remaining cache space is cache space that is unoccupied in total cache space of the port; and
the method further comprises:
controlling, by the first device, adding of a packet to the first queue based on the queue threshold of the first queue.

3. The method according to claim 1 or 2, wherein the increasing (S203), by the first device, a first cache parameter when the packet drop parameter of the first queue is greater than the first packet drop threshold comprises:
increasing, by the first device, the first cache parameter when the packet drop parameter of the first queue is greater than the first packet drop threshold, and the first cache parameter is less than an upper limit of a cache parameter.

4. The method according to any one of claims 1 to 3, wherein the method further comprises:
determining, by the first device, that when each of the M periods ahead of the i^{th} period ends, a total quantity of bytes of packets cached in the first queue is less than or equal to a specified threshold.

5. The method according to any one of claims 1 to 4, wherein the method further comprises: storing, by the first device, the packet drop parameter of the first queue in the i^{th} period.

6. The method according to any one of claims 1 to 5, wherein the first queue is for forwarding a packet of a mice flow, a quantity of packets comprised in the mice flow is less than or equal to N, and N is a positive integer; and
the method further comprises:
determining (S301), by the first device, a forwarding parameter of the first queue and a forwarding parameter of a second queue, wherein the second queue belongs to the port on which the first queue is located, the second queue is for forwarding a packet of an elephant flow, and the forwarding parameter comprises an average packet length and/or a forwarding rate; and
adjusting (S303), by the first device, N when a ratio of the forwarding parameter of the first queue to the forwarding parameter of the second queue is greater or lower than an upper or respectively lower limit value of a range of values.

7. The method according to claim 6, wherein the adjusting (S303), by the first device, N when a ratio of the forwarding parameter of the first queue to the forwarding parameter of the second queue does not match an expected ratio comprises:
decreasing, by the first device, N when the ratio of the forwarding parameter of the first queue to the forwarding parameter of the second queue is greater than the expected ratio; or
increasing, by the first device, N when the ratio of the forwarding parameter of the first queue to the forwarding parameter of the second queue is less than the expected ratio.

8. The method according to claim 6 or 7, wherein the method further comprises:
adjusting, by the first device, a second cache parameter when the packet drop parameter of the first queue is greater than a third packet drop threshold; and
probabilistically dropping, by the first device based on the second cache parameter, a packet to be added to the second queue.

9. The method according to claim 8, wherein the second cache parameter comprises a start threshold and a stop threshold, and the adjusting, by the first device, a second cache parameter comprises:
decreasing, by the first device, the start threshold and/or the stop threshold; and
the probabilistically dropping, by the first device based on the second cache parameter, a packet to be added to the second queue comprises:
when a total quantity of bytes of packets cached in the second queue is greater than or equal to the start threshold and is less than or equal to the stop threshold, determining, by the first device, a packet drop probability based on the total quantity of bytes of the packets cached in the second queue, the start threshold, and the stop threshold; and
dropping, by the first device based on the packet drop probability, the packet to be added to the second queue.

10. The method according to claim 8 or 9, wherein the packet drop parameter of the first queue comprises a packet drop parameter of the first queue in a j^{th} period, the packet drop parameter of the first queue in the j^{th} period is determined based on a packet that is dropped because the packet cannot be added to the first queue in the j^{th} period, and j is a positive integer; and the method further comprises:
obtaining, by the first device, a packet drop parameter of the first queue in each of K periods ahead of the j^{th} period, wherein K is a positive integer less than j; and
increasing, by the first device, the start threshold and/or the stop threshold when the packet drop parameter of the first queue in each of the K periods ahead of the j^{th} period is less than a fourth packet drop threshold.

11. A first device comprising a chip, the chip incudling a processor, configured to perform the queue control method according to any one of claims 1 to 10.

12. A computer-readable storage medium, comprising instructions, a program, or code, and when the instructions, the program, or the code is executed on a computer, the computer is enabled to perform the queue control method according to any one of claims 1 to 10.

## Patentansprüche

1. Warteschlangensteuerungsverfahren, wobei das Verfahren Folgendes umfasst:
Erlangen (S201), durch eine erste Vorrichtung, eines Paketverwerfungsparameters einer ersten Warteschlange, wobei der Paketverwerfungsparameter der ersten Warteschlange basierend auf einem Paket bestimmt wird, das verworfen wird, weil es nicht zu der ersten Warteschlange hinzugefügt werden kann; und
Erhöhen (S203), durch die erste Vorrichtung, eines ersten Zwischenspeicherparameters, wenn der Paketverwerfungsparameter der ersten Warteschlange größer als ein Paketverwerfungsschwellenwert ist, wobei der erste Zwischenspeicherparameter zum Anpassen eines Warteschlangenschwellenwerts der ersten Warteschlange dient und der Warteschlangenschwellenwert der ersten Warteschlange eine maximale Gesamtmenge von Bytes von Paketen angibt, die in der ersten Warteschlange zwischengespeichert werden dürfen;
wobei das Verfahren, wenn der Paketverwerfungsparameter der ersten Warteschlange kleiner als der Paketverwerfungsschwellenwert oder gleich diesem ist, ferner Folgendes umfasst:
Verringern, durch die erste Vorrichtung, des ersten Zwischenspeicherparameters, wenn der Paketverwerfungsparameter der ersten Warteschlange kleiner als ein zweiter Paketverwerfungsschwellenwert ist, wobei der zweite Paketverwerfungsschwellenwert kleiner als der erste Paketverwerfungsschwellenwert oder gleich diesem ist; wobei das Verfahren **dadurch gekennzeichnet ist, dass**
der Paketverwerfungsparameter der ersten Warteschlange ein Paketverwerfungsparameter der ersten Warteschlange in einer i-ten Periode ist, i eine positive ganze Zahl ist und das Verfahren vor dem Verringern des ersten Zwischenspeicherparameters ferner Folgendes umfasst:
Erlangen, durch die erste Vorrichtung, eines Paketverwerfungsparameters der ersten Warteschlange in jeder der M Perioden vor der i-ten Periode, wobei M eine positive ganze Zahl kleiner als i ist; und
Bestimmen, durch die erste Vorrichtung, dass der Paketverwerfungsparameter der ersten Warteschlange in jeder der M Perioden vor der i-ten Periode kleiner als der zweite Paketverwerfungsschwellenwert ist.

2. Verfahren nach Anspruch 1, wobei der erste Zwischenspeicherparameter ein Verhältnis des von der ersten Warteschlange belegbaren Zwischenspeicherplatzes zu einem verbleibenden Zwischenspeicherplatz eines Ports angibt, an dem sich die erste Warteschlange befindet, und der verbleibende Zwischenspeicherplatz der in einem gesamten Zwischenspeicherplatz des Ports nicht belegte Zwischenspeicherplatz ist; und
wobei das Verfahren ferner Folgendes umfasst:
Steuern, durch die erste Vorrichtung, von Hinzufügen eines Pakets zu der ersten Warteschlange, basierend auf dem Warteschlangenschwellenwert der ersten Warteschlange.

3. Verfahren nach Anspruch 1 oder 2, wobei das Erhöhen (S203), durch die erste Vorrichtung, eines ersten Zwischenspeicherparameters, wenn der Paketverwerfungsparameter der ersten Warteschlange größer als der erste Paketverwerfungsschwellenwert ist, Folgendes umfasst:
Erhöhen, durch die erste Vorrichtung, des ersten Zwischenspeicherparameters, wenn der Paketverwerfungsparameter der ersten Warteschlange größer als der erste Paketverwerfungsschwellenwert ist und der erste Zwischenspeicherparameter kleiner als eine obere Grenze eines Zwischenspeicherparameters ist.

4. Verfahren nach einem der Ansprüche 1 bis 3, wobei das Verfahren ferner Folgendes umfasst:
Bestimmen, durch die erste Vorrichtung, dass, wenn jede der M Perioden vor der i-ten Periode endet, eine Gesamtmenge von Bytes von Paketen der in der ersten Warteschlange zwischengespeicherten Pakete kleiner als ein definierter Schwellenwert oder gleich diesem ist.

5. Verfahren nach einem der Ansprüche 1 bis 4, wobei das Verfahren ferner Folgendes umfasst:
Speichern, durch die erste Vorrichtung, des Paketverwerfungsparameters der ersten Warteschlange in der i-ten Periode.

6. Verfahren nach einem der Ansprüche 1 bis 5, wobei die erste Warteschlange zum Weiterleiten eines Pakets eines Mice-Flow dient, eine Menge der in dem Mice-Flow umfassten Pakete kleiner als oder gleich N ist und N eine positive ganze Zahl ist; und wobei das Verfahren ferner Folgendes umfasst:
Bestimmen (S301), durch die erste Vorrichtung, eines Weiterleitungsparameters der ersten Warteschlange und eines Weiterleitungsparameters einer zweiten Warteschlange, wobei die zweite Warteschlange zu dem Port gehört, an dem sich die erste Warteschlange befindet, die zweite Warteschlange zum Weiterleiten eines Pakets eines Elephant-Flow dient und der Weiterleitungsparameter eine durchschnittliche Paketlänge und/oder eine Weiterleitungsrate umfasst; und
Anpassen (S303), durch die erste Vorrichtung, von N, wenn ein Verhältnis des Weiterleitungsparameters der ersten Warteschlange zu dem Weiterleitungsparameter der zweiten Warteschlange größer oder kleiner als ein oberer bzw. unterer Grenzwert eines Bereichs von Werten ist.

7. Verfahren nach Anspruch 6, wobei das Anpassen (S303), durch die erste Vorrichtung, von N, wenn ein Verhältnis des Weiterleitungsparameters der ersten Warteschlange zu dem Weiterleitungsparameter der zweiten Warteschlange nicht einem erwarteten Verhältnis entspricht, Folgendes umfasst:
Verringern, durch die erste Vorrichtung, von N, wenn das Verhältnis des Weiterleitungsparameters der ersten Warteschlange zu dem Weiterleitungsparameter der zweiten Warteschlange größer als das erwartete Verhältnis ist; oder
Erhöhen, durch die erste Vorrichtung, von N, wenn das Verhältnis des Weiterleitungsparameters der ersten Warteschlange zu dem Weiterleitungsparameter der zweiten Warteschlange kleiner als das erwartete Verhältnis ist.

8. Verfahren nach Anspruch 6 oder 7, wobei das Verfahren ferner Folgendes umfasst:
Anpassen, durch die erste Vorrichtung, eines zweiten Zwischenspeicherparameters, wenn der Paketverwerfungsparameter der ersten Warteschlange größer als ein dritter Paketverwerfungsschwellenwert ist; und
probabilistisches Verwerfen, durch die erste Vorrichtung basierend auf dem zweiten Zwischenspeicherparameter, eines Pakets, das zu der zweiten Warteschlange hinzuzufügen ist.

9. Verfahren nach Anspruch 8, wobei der zweite Zwischenspeicherparameter einen Startschwellenwert und einen Stoppschwellenwert umfasst und das Anpassen, durch die erste Vorrichtung, eines zweiten Zwischenspeicherparameters Folgendes umfasst:
Verringern, durch die erste Vorrichtung, des Startschwellenwerts und/oder des Stoppschwellenwerts; und
das probabilistische Verwerfen, durch die erste Vorrichtung basierend auf dem zweiten Zwischenspeicherparameter, eines Pakets, das zu der zweiten Warteschlange hinzuzufügen ist, Folgendes umfasst:
wenn eine Gesamtmenge von Bytes von Paketen, die in der zweiten Warteschlange zwischengespeichert sind, größer als der Startschwellenwert oder gleich diesem ist und kleiner als der Stoppschwellenwert oder gleich diesem ist, Bestimmen, durch die erste Vorrichtung, einer Paketververwerfungswahrscheinlichkeit basierend auf der Gesamtmenge von Bytes der Pakete, die in der zweiten Warteschlange zwischengespeichert sind, dem Startschwellenwert und dem Stoppschwellenwert; und
Verwerfen, durch die erste Vorrichtung basierend auf der Paketverwerfungswahrscheinlichkeit, des Pakets, das zu der zweiten Warteschlange hinzuzufügen ist.

10. Verfahren nach Anspruch 8 oder 9, wobei der Paketverwerfungsparameter der ersten Warteschlange einen Paketverwerfungsparameter der ersten Warteschlange in der j-ten Periode umfasst, wobei der Paketverwerfungsparameter der ersten Warteschlange in der j-ten Periode basierend auf einem Paket bestimmt wird, das verworfen worden ist, weil es in der j-ten Periode nicht zu der ersten Warteschlange hinzugefügt werden konnte, und j eine positive ganze Zahl ist; und das Verfahren ferner Folgendes umfasst:
Erlangen, durch die erste Vorrichtung, eines Paketverwerfungsparameters der ersten Warteschlange in jeder von K Perioden vor der j-ten Periode, wobei K eine positive ganze Zahl kleiner als j ist; und
Erhöhen, durch die erste Vorrichtung, des Startschwellenwerts und/oder des Stoppschwellenwerts, wenn der Paketverwerfungsparameter der ersten Warteschlange in jeder der K Perioden vor der j-ten Periode kleiner als ein vierter Paketverwerfungsschwellenwert ist.

11. Erste Vorrichtung, umfassend einen Chip, wobei der Chip einen Prozessor beinhaltet, der dazu konfiguriert ist, das Warteschlangensteuerungsverfahren nach einem der Ansprüche 1 bis 10 durchzuführen.

12. Computerlesbares Speichermedium, umfassend Anweisungen, ein Programm oder einen Code, und wobei, wenn die Anweisungen, das Programm oder der Code auf einem Computer ausgeführt werden, der Computer in die Lage versetzt wird, das Warteschlangensteuerungsverfahren nach einem der Ansprüche 1 bis 10 durchzuführen.

## Revendications

1. Procédé de commande de file d''attente, dans lequel le procédé comprend :
l''obtention (S201), par un premier dispositif, d'un paramètre d'abandon de paquets d'une première file d'attente, dans lequel le paramètre d'abandon de paquets de la première file d'attente est déterminé sur la base d'un paquet qui est abandonné parce que le paquet ne peut pas être ajouté à la première file d'attente ; et
l'augmentation (S203), par le premier dispositif, d'un premier paramètre de cache lorsque le paramètre d'abandon de paquets de la première file d'attente est supérieur à un premier seuil d'abandon de paquets, dans lequel le premier paramètre de cache sert à régler un seuil de file d'attente de la première file d'attente, et le seuil de file d'attente de la première file d'attente indique une quantité totale maximale d'octets de paquets autorisés à être mis en cache dans la première file d'attente ;
dans lequel, lorsque le paramètre d'abandon de paquets de la première file d'attente est inférieur ou égal au premier seuil d'abandon de paquets, le procédé comprend également :
la diminution, par le premier dispositif, du premier paramètre de cache lorsque le paramètre d'abandon de paquets de la première file d'attente est inférieur à un deuxième seuil d'abandon de paquets, dans lequel le deuxième seuil d'abandon de paquets est inférieur ou égal au premier seuil d'abandon de paquets ; le procédé étant **caractérisé en ce que**
le paramètre d'abandon de paquets de la première file d'attente est un paramètre d'abandon de paquets de la première file d'attente pendant une i^{ème} période, i étant un entier positif, et avant la diminution du premier paramètre de cache, le procédé comprend également :
l'obtention, par le premier dispositif, d'un paramètre d'abandon de paquets de la première file d'attente dans chacune des M périodes précédant la i^{ème} période, dans lequel M est un entier positif inférieur à i ; et
la détermination, par le premier dispositif, que le paramètre d'abandon de paquets de la première file d'attente dans chacune des M périodes précédant la i^{ème} période est inférieur au deuxième seuil d'abandon de paquets.

2. Procédé selon la revendication 1, dans lequel le premier paramètre de cache indique un rapport entre l'espace de cache pouvant être occupé par la première file d'attente et l'espace de cache restant du port sur lequel se trouve la première file d'attente, l'espace de cache restant étant l'espace de cache non occupé dans l'espace de cache total du port ; et
le procédé comprend également :
la commande, par le premier dispositif, de l'ajout d'un paquet à la première file d'attente sur la base du seuil de file d'attente de la première file d'attente.

3. Procédé selon la revendication 1 ou 2, dans lequel l'augmentation (S203), par le premier dispositif, d'un premier paramètre de cache lorsque le paramètre d'abandon de paquets de la première file d'attente est supérieur au premier seuil d'abandon de paquets, comprend :
l'augmentation, par le premier dispositif, du premier paramètre de cache lorsque le paramètre d'abandon de paquets de la première file d'attente est supérieur au premier seuil d'abandon de paquets, et que le premier paramètre de cache est inférieur à une limite supérieure d'un paramètre de cache.

4. Procédé selon l'une quelconque des revendications 1 à 3, dans lequel le procédé comprend également :
la détermination, par le premier dispositif, que lorsque chacune des M périodes précédant la i^{ème} période se termine, la quantité totale d'octets de paquets mis en cache dans la première file d'attente est inférieure ou égale à un seuil spécifié.

5. Procédé selon l'une quelconque des revendications 1 à 4, dans lequel le procédé comprend également :
le stockage, par le premier dispositif, du paramètre d'abandon de paquets de la première file d'attente pendant la i^{ème} période.

6. Procédé selon l'une quelconque des revendications 1 à 5, dans lequel la première file d'attente sert à acheminer un paquet d'un flux souris, la quantité de paquets compris dans le flux souris est inférieure ou égale à N, et N est un entier positif ; et
le procédé comprend également :
la détermination (S301), par le premier dispositif, d'un paramètre de transfert de la première file d'attente et d'un paramètre de transfert d'une seconde file d'attente, dans lequel la seconde file d'attente appartient au port sur lequel se trouve la première file d'attente, la seconde file d'attente est destinée au transfert d'un paquet d'un flux éléphant, et le paramètre de transfert comprend une longueur moyenne de paquet et/ou un débit de transfert ; et
le réglage (S303), par le premier dispositif, de N lorsqu'un rapport du paramètre de transfert de la première file d'attente au paramètre de transfert de la seconde file d'attente est supérieur ou inférieur à une valeur limite supérieure ou respectivement inférieure d'une plage de valeurs.

7. Procédé selon la revendication 6, dans lequel le réglage (S303), par le premier dispositif, de N lorsque le rapport du paramètre de transfert de la première file d'attente au paramètre de transfert de la seconde file d'attente ne correspond pas à un rapport attendu, comprend :
la diminution, par le premier dispositif, de N lorsque le rapport du paramètre de transfert de la première file d'attente au paramètre de transfert de la seconde file d'attente est supérieur au rapport attendu ; ou
l'augmentation, par le premier dispositif, de N lorsque le rapport du paramètre de transfert de la première file d'attente au paramètre de transfert de la seconde file d'attente est inférieur au rapport attendu.

8. Procédé selon la revendication 6 ou 7, dans lequel le procédé comprend également :
le réglage, par le premier dispositif, d'un second paramètre de cache lorsque le paramètre d'abandon de paquets de la première file d'attente est supérieur à un troisième seuil d'abandon de paquets ; et
l'abandon probabiliste, par le premier dispositif sur la base du second paramètre de cache, d'un paquet à ajouter à la seconde file d'attente.

9. Procédé selon la revendication 8, dans lequel le second paramètre de cache comprend un seuil de démarrage et un seuil d'arrêt, et le réglage, par le premier dispositif, d'un second paramètre de cache comprend :
la diminution, par le premier dispositif, du seuil de démarrage et/ou du seuil d'arrêt ; et
l'abandon probabiliste, par le premier dispositif sur la base du second paramètre de cache, d'un paquet à ajouter à la seconde file d'attente comprend :
lorsque la quantité totale d'octets de paquets mis en cache dans la seconde file d'attente est supérieure ou égale au seuil de démarrage et inférieure ou égale au seuil d'arrêt, la détermination, par le premier dispositif, d'une probabilité d'abandon de paquets sur la base de la quantité totale d'octets de paquets mis en cache dans la seconde file d'attente, du seuil de démarrage et du seuil d'arrêt ; et
l'abandon, par le premier dispositif sur la base de la probabilité d'abandon de paquets, du paquet à ajouter à la seconde file d'attente.

10. Procédé selon la revendication 8 ou 9, dans lequel le paramètre d'abandon de paquets de la première file d'attente comprend un paramètre d'abandon de paquets de la première file d'attente pendant une j^{ième} période, le paramètre d'abandon de paquets de la première file d'attente pendant la j^{ième} période est déterminé sur la base d'un paquet qui a été abandonné parce que le paquet ne peut pas être ajouté à la première file d'attente pendant la j^{ième} période, et j est un entier positif ; et le procédé comprend également :
l'obtention, par le premier dispositif, d'un paramètre d'abandon de paquets de la première file d'attente dans chacune des K périodes précédant la j^{ième} période, dans lequel K est un entier positif inférieur à j ; et
l'augmentation, par le premier dispositif, du seuil de démarrage et/ou du seuil d'arrêt lorsque le paramètre d'abandon de paquets de la première file d'attente dans chacune des K périodes précédant la ji^{ème} période est inférieur à un quatrième seuil d'abandon de paquets.

11. Premier dispositif comprenant une puce, la puce comportant un processeur, configuré pour mettre en œuvre le procédé de commande de file d'attente selon l'une quelconque des revendications 1 à 10.

12. Support de stockage lisible par ordinateur, comprenant des instructions, un programme ou un code, et lorsque les instructions, le programme ou le code sont exécutés sur un ordinateur, cela permet à l'ordinateur de mettre en œuvre le procédé de commande de file d'attente selon l'une quelconque des revendications 1 à 10.
